Europäisches Patentamt

European Patent Office

Office européen des brevets

(19)

(11) **EP 1 605 276 A1**

(12) **DEMANDE DE BREVET EUROPEEN**

(43) Date de publication:
**14.12.2005 Bulletin 2005/50**

(51) Int Cl.⁷: **G01S 5/06**, G01R 29/08

(21) Numéro de dépôt: 05291159.1

(22) Date de dépôt: **30.05.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **09.06.2004 FR 0406225**

(71) Demandeur: **INSTITUT NATIONAL DE RECHERCHE SUR LES TRANSPORTS ET LEUR SECURITE (INRETS) 94110 Arcueil (FR)**

(72) Inventeurs:
• **Rioult, Jean 59000 Lille (FR)**
• **Heddebaut, Marc 59262 Sainghin en Melantois (FR)**
• **Ghys, Jean-Pierre 59310 Sameon (FR)**
• **Deniau, Virginie 59000 Lille (FR)**

(74) Mandataire: **Laget, Jean-Loup Cabinet Peuscet, 78, avenue Raymond Poincaré 75116 Paris (FR)**

(54) **Localisation d'une source de rayonnement électromagnetique sur un équipement électrique**

(57) Procédé de localisation d'une source de rayonnement électromagnétique sur un équipement électrique (20), caractérisé par le fait qu'il comporte les étapes consistant à disposer ledit équipement dans une zone de détection commune à plusieurs capteurs de rayonnement électromagnétique (22a-f) et produire un rayonnement depuis cet équipement, enregistrer un signal de mesure respectif de chacun desdits capteurs dans le domaine temporel, sélectionner une fréquence à laquelle est produit un rayonnement détectable par lesdits capteurs, dans chacun desdits signaux de mesure, déterminer la phase d'une composante fréquentielle respective correspondant à ladite fréquence sélectionnée, localiser une source dudit rayonnement en fonction des positions desdits capteurs et des phases desdites composantes. Dans un mode de réalisation, un calculateur détermine une position de source dans l'espace tridimensionnel par la technique des différences de temps d'arrivée des ondes au niveau de trois capteurs.

FIG.4

**Description**

La présente invention se rapporte à un procédé de localisation d'une source de rayonnement électromagnétique sur ou dans un équipement électrique, à un dispositif de localisation d'une source de rayonnement électromagnétique et à un programme d'ordinateur pouvant être exécutés par un ordinateur pour localiser une source de rayonnement électromagnétique.

Les essais de compatibilité électromagnétique (CEM) jouent un rôle important dans la conception des équipements électriques ou électroniques pour assurer leur sûreté de fonctionnement et respecter les réglementations relatives aux émissions de rayonnement. On utilise actuellement plusieurs moyens d'essais complémentaires, tels que les chambres anéchoïques, les cellules transverses électromagnétiques (TEM), les cellules giga transverses électromagnétiques (GTEM) et les chambres réverbérantes à brassage de modes, pour mesurer le rayonnement, l'immunité et les caractéristiques électromagnétiques d'équipements ou de systèmes électriques ou électroniques de toutes sortes (carte à circuit imprimé, téléphone, automobile munie d'électronique embarquée....).

Les techniques actuelles d'évaluation du rayonnement électromagnétique des équipements électriques ou électroniques dans les cellules TEM et GTEM reposent uniquement sur des mesures d'amplitudes de tensions aux ports de ces cellules dans le domaine de fréquences. Les résultats obtenus fournissent la puissance totale rayonnée. Ces mesures ne fournissent donc qu'une information partielle sur le rayonnement de l'équipement sous test. Il est alors très difficile d'interpréter ces résultats en vue d'obtenir un diagnostic du rayonnement électromagnétique de l'équipement sous test et d'améliorer sa conception sur le plan du comportement électromagnétique.

Dans US 5589773, on a décrit un système permettant de mesurer le champ total rayonné par un objet sous test dans une cellule TEM ou GTEM. L'objet sous test, solidaire d'un plateau orientable, peut être orientée dans toutes les positions afin d'acquérir à chaque fois une mesure amplitude-fréquence du champ électrique ou magnétique associé. En chaque position, un ordinateur interroge le dispositif de mesure et enregistre les résultats issus de l'analyse spectrale. Un calcul fondé sur la théorie des moments électriques et magnétiques permet d'extraire les informations sur les champs rayonnés globaux électriques et magnétiques.

Dans WO 01/20353, on a décrit un procédé de mesure permettant d'obtenir un diagnostic complet de la nature électrique ou magnétique du rayonnement de l'équipement sous test, par une mesure des évolutions temporelles des tensions recueillies aux ports d'une cellule TEM. Il devient alors possible d'identifier les contributions des différentes lignes et boucles du circuit sous test.

Mais, s'il est possible, dans certains moyens de mesure en CEM, d'obtenir une identification globale des sources de rayonnement placées dans un dispositif d'essai, il est souhaitable d'atteindre une localisation et/ou une identification plus précise de chacune des sources de rayonnement composant le rayonnement global de l'équipement sous test.

US 5844414 décrit un système commercialisé fondé sur l'utilisation d'une table à trois axes de déplacement qui permet de réaliser une cartographie de champ proche électromagnétique ou thermique d'un circuit disposé sur cette table. Le principe de la mesure consiste à déplacer, au-dessus du circuit sous test, une sonde mesurant très localement le champ émis au voisinage de ses composants. Ce dispositif mécanique est disposé dans un environnement (sur une table de mesure) qui est différent de l'environnement effectif de fonctionnement de l'équipement sous test et qui peut donc introduire un biais dans les mesures de rayonnement. A chaque position de la sonde, le dispositif effectue une acquisition de mesure de champ proche, ce qui peut prendre un temps long en fonction de la résolution souhaitée, d'autant plus que l'on souhaite obtenir une valeur moyenne de mesure représentative de la zone associée. Enfin, pour disposer d'une mesure précise, la sonde doit se déplacer à une distance très courte du circuit, ce qui implique une connaissance préalable du profil tridimensionnel de l'objet sous test. Trop éloignée, la sonde mesure globalement la somme de plusieurs contributions locales et il devient impossible d'identifier l'origine des rayonnements thermiques ou électromagnétiques détectés. En outre, ces mesures de champ proche ne permettent pas facilement de connaître le champ lointain. Or, les mesures de champ lointain ou équivalentes, telles que dans une chambre anéchoïque, reproduisant des conditions d'espace libre s'avèrent les plus exigées au titre des normes de mesure en CEM.

L'article de H. HIRAYAMA et Y. KAMI, Electromagnetic Compatibility Symposium Proceedings EMC Zurich 2003, pp 661-666 décrit une méthode pour acquérir la distribution de vecteur de Poynting à partir d'une mesure du champ proche d'une carte à circuit imprimé dans une chambre anéchoïque. Une prédiction du champ lointain émis est proposée, mais n'atteint qu'un résultat qualitatif.

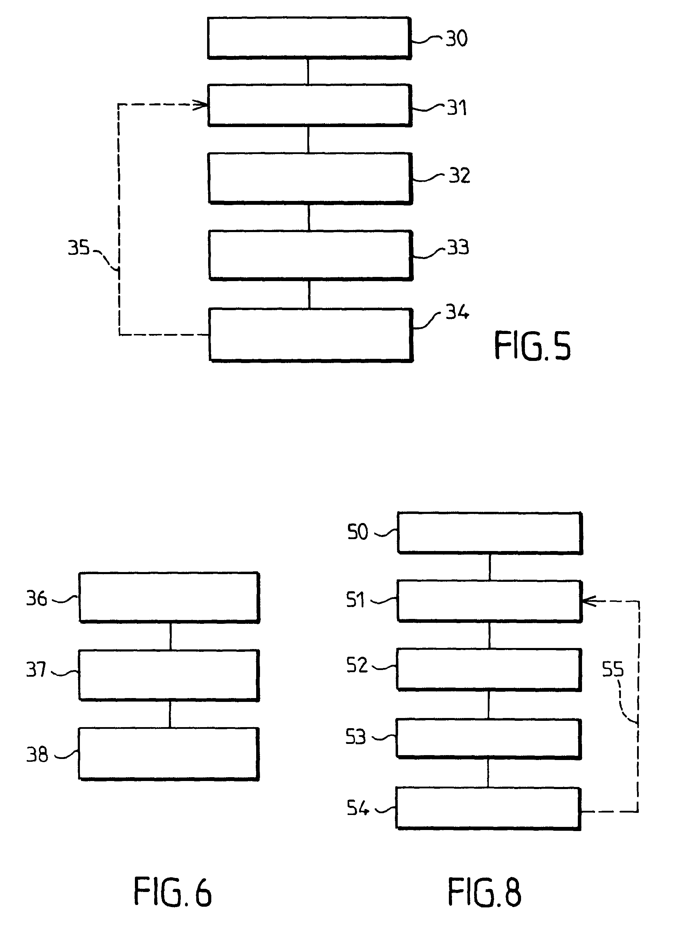

US 2002/0153904 décrit un procédé permettant la mesure de la position de sources de rayonnement de type purement magnétique à partir de deux sondes mobiles évoluant dans un plan et se déplaçant à proximité immédiate d'un équipement sous test. Ces sondes sont sensibles au rayonnement magnétique en champ proche de l'équipement sous test. Ce procédé vise à créer une carte de la distribution des courants à la surface de l'équipement sous test (§ 0044 et figure 5). Du fait de la nécessité de maintenir les sondes dans un plan à courte distance de l'équipement sous test, ce procédé ne convient que pour un équipement de forme plane et permet de localiser les courants sources uniquement dans un plan. De plus, les sondes ne voient qu'une portion de l'équipement sous test à chaque position de mesure.

US 6700536 divulgue un procédé pour déterminer la direction d'arrivée d'un signal électromagnétique selon une ou deux dimensions à l'aide de deux capteurs fixés sur un avion. Ce procédé est destiné à être exploité en vol afin de déterminer la direction d'arrivée d'un faisceau radar susceptible de représenter une menace pour l'avion. Dans ces conditions, le champ de vision des capteurs balaie une portion de la surface terrestre et de l'espace aérien et permet de détecter la présence d'un radar pointé sur l'avion s'il en trouve un. La position du radar est déterminée dans le référentiel de l'avion en vol et la distance entre l'avion et le radar n'est pas mesurée, de sorte qu'une localisation de la source de rayonnement dans l'espace tridimensionnel n'est pas atteinte. De plus, ce procédé et ce système permettent de détecter la position d'un radar dans son ensemble, par exemple, sur la surface terrestre. Il n'est pas adapté à localiser une source de rayonnement sur ou dans un équipement électrique. Ce procédé relève d'un domaine technique éloigné du domaine des essais de compatibilité électromagnétique.

Le document XP010603260 (Kazama et al.) décrit un système de mesure qui permet de mesurer la distribution du champ électromagnétique dans un plan très proche d'un équipement sous test également plan, à une distance inférieure au centième de la longueur d'onde du champ mesuré. Une sonde unique formée de deux tronçons de câble coaxiaux est déplacée dans un plan et ne voit qu'une très petite portion de l'équipement sous test à chaque position, de sorte qu'une mesure très locale set obtenue. Du fait de la nécessité de maintenir les sondes dans un plan à courte distance de l'équipement sous test, ce procédé ne convient que pour un équipement de forme plane et permet de localiser les courants sources uniquement dans un plan.

L'invention a pour but de proposer un procédé et un dispositif permettant de localiser les zones d'un équipement électrique qui sont à l'origine d'un rayonnement électromagnétique, notamment en champ lointain. L'invention a aussi pour but de permettre une caractérisation précise du rayonnement de telles zones.

Pour cela, l'invention fournit un procédé de localisation d'une source de rayonnement électromagnétique sur ou dans un équipement électrique, caractérisé par le fait qu'il comporte les étapes consistant à :

disposer ledit équipement dans une zone de détection commune à plusieurs capteurs de rayonnement électromagnétique et produire un rayonnement depuis ledit équipement,
enregistrer un signal de mesure respectif de chacun desdits capteurs dans le domaine temporel,
sélectionner, par exemple après une transformation mathématique temps-fréquence, une fréquence à laquelle est produit un rayonnement détectable par lesdits capteurs,
dans chacun desdits signaux de mesure, déterminer la phase d'une composante fréquentielle respective correspondant à ladite fréquence sélectionnée,
localiser une source dudit rayonnement en fonction des positions desdits capteurs et des phases desdites composantes.

Ainsi, un expérimentateur mettant en oeuvre ces étapes pourra obtenir une cartographie des zones de rayonnement de l'équipement sous test et, à titre d'exemple, identifier les zones critiques sur lesquelles il doit intervenir afin d'améliorer la conception de son équipement ou d'assurer sa conformité. Au sens de l'invention, une source de rayonnement sur un équipement désigne tout élément ou toute zone de cet équipement d'où est émis un signal électromagnétique, volontaire ou involontaire, propagatif ou non. Il peut donc s'agir aussi bien d'une source primaire, telle qu'une piste conductrice parcourue par un courant, un câblage ou un composant, que d'une source secondaire, par exemple une fente dans un boîtier donnant lieu à une diffraction des champs produits à l'intérieur du boîtier. Selon la fréquence sélectionnée ou les caractéristiques particulières, à certaines fréquences, d'environnement électromagnétique dans la zone de détection commune aux plusieurs capteurs, la précision de localisation obtenue sera différente. Ainsi, à titre d'exemple, une précision de localisation de l'ordre de quelques centimètres dans un pourcentage de cas suffisant ne sera obtenue qu'à des fréquences suffisamment élevées et dans un environnement électromagnétique présentant des chemins de propagation directs sources-capteurs de manière prépondérante.

De préférence, les signaux de mesure sont enregistrés sous la forme de trames temporelles respectives, ou formes d'ondes, la trame temporelle d'un desdits signaux de mesure étant à chaque fois enregistrée simultanément avec la trame temporelle d'au moins un autre desdits signaux de mesure, les phases desdites composantes fréquentielles étant déterminées par transformation de Fourier desdites trames temporelles. Les formes d'ondes émises globalement par un équipement complexe abritant plusieurs éléments électroniques en fonctionnement simultané mais non synchrones sont très complexes, non sinusoïdales. Il en découle qu'il est possible d'identifier une fenêtre de temps finie durant laquelle on acquiert simultanément les signaux rayonnés sur au moins deux voies. La fenêtre de temps identifiée de cette sorte fournie ainsi la référence de phase commune nécessaire aux différentes mesures effectuées simultanément puis à la transposition des signaux dans le domaine des fréquences. Avantageusement, on effectue l'étape consistant à calculer une différence de phase entre les composantes fréquentielles issues de deux trames temporelles enregistrées simultanément. La mesure d'une telle différence de phase est équivalente à la mesure des différences de temps de propagation depuis les sources de rayonnement jusqu'aux capteurs.

Selon un premier mode de réalisation particulier du procédé, on dispose ledit équipement sensiblement sur un axe géométrique passant par le centre de phase respectif des deux capteurs dont proviennent lesdites deux trames temporelles enregistrées simultanément et on détermine une position de ladite source le long dudit axe géométrique directement à partir de ladite différence de phase.

Selon un deuxième mode de réalisation particulier du procédé, on localise la source du rayonnement sur au moins une espèce géométrique hyperbolique correspondant à ladite au moins une différence de phase. De préférence dans ce cas, on utilise trois capteurs et on calcule trois différences de phase à chaque fois entre les composantes fréquentielles issues de deux trames temporelles enregistrées simultanément par une paire de capteurs distincte et on localise ladite source par résolution de trois équations hyperboliques correspondant respectivement auxdites différences de phases calculées.

Avantageusement, on place ledit équipement et lesdits capteurs dans une enceinte close d'essai en compatibilité électromagnétique. Une telle enceinte peut par exemple être constituée d'une chambre anéchoïque, d'une cellule TEM, d'une cellule GTEM, d'une chambre réverbérante à brassage de modes ou de toute enceinte métallique close recouverte ou non de matériaux absorbants sur sa surface intérieure.

En fonction du moyen d'essai (cellule TEM, chambre anéchoïque), la localisation peut s'effectuer selon un axe (axe de propagation ou axe du septum dans le cas de la cellule TEM) ou selon trois axes (chambre anéchoïque). Dans le cas d'une cellule TEM, il n'est pas nécessaire d'ajouter des capteurs de champ supplémentaires car on peut connecter le système de localisation directement aux deux ports d'extrémités de la cellule. L'intérêt de la localisation est particulièrement élevé dans le cas d'une localisation 3D dans un moyen d'essais constitué d'un volume fermé (chambre anéchoïque, chambre réverbérante, cellule Tem 3D...) ou radioélectriquement calme présentant des propriétés électromagnétiques isotropes selon trois axes orthogonaux.

Le procédé peut aussi être mis en oeuvre dans l'espace libre. L'espace libre est généralement traversé d'un bruit électromagnétique ambiant qui peut, selon son amplitude, perturber le déroulement du procédé ou rendre son résultat imprécis. Toutefois, un tel bruit n'existe pas à toutes les fréquences et dans tous les lieux. De préférence, on sélectionnera donc un lieu où il n'existe pas de bruit significatif aux fréquences auxquelles on souhaite travailler.

Selon un mode de réalisation préféré, on effectue l'étape consistant à déterminer un spectre de rayonnement dudit équipement à partir du signal de mesure d'au moins un desdits capteurs, ladite fréquence étant sélectionnée dans ledit spectre. La fréquence de travail peut être sélectionnée différemment, par exemple par connaissance de cette fréquence a priori ou par balayage d'un intervalle de fréquences.

De préférence, on compare ledit spectre à un gabarit prédéterminé et on sélectionne une fréquence pour laquelle une raie dudit spectre dépasse ledit gabarit.

Avantageusement, on répète les étapes de détermination de phase et de localisation de source pour plusieurs fréquences. Par exemple, on répète ces étapes pour l'ensemble des fréquences du spectre de rayonnement contribuant significativement à l'énergie rayonnée par l'équipement.

Dans un autre mode de réalisation particulier, on effectue l'étape consistant à sélectionner une partie électrique, respectivement une partie magnétique, des signaux de mesure des capteurs pour localiser une source de rayonnement électrique, respectivement magnétique.

Des capteurs de toutes sortes sensibles au champ électromagnétique peuvent être utilisés dans ce procédé, c'est-à-dire notamment des antennes de tous les types, par exemple planes, en forme de tiges, en forme de boucles, etc. De manière générale, les capteurs sont choisis de manière à offrir une sensibilité suffisante au rayonnement de l'équipement électrique sous test. Des critères de choix des capteurs sont la fréquence ou plage de fréquences de travail, la prépondérance électrique ou magnétique du rayonnement à détecter, si toutefois une telle prépondérance existe, la polarisation du rayonnement à détecter, si toutefois une polarisation particulière existe. De préférence, on utilise des capteurs identiques ou similaires pour détecter des champs de même nature avec les différents capteurs.

Selon un mode de réalisation particulier, le rayonnement émis depuis l'équipement est produit en faisant fonctionner ledit équipement. L'intérêt de ce type de mesures est de ne pas devoir faire se déplacer l'équipement sous test, mais d'acquérir une cartographie complète sans modification d'orientation.

Selon un autre mode de réalisation, on produit ce rayonnement en faisant fonctionner une source de rayonnement primaire que l'on a ajoutée à l'intérieur dudit équipement. Avec ce mode de réalisation, on peut avoir une maîtrise complète de la plage de fréquences couverte par l'essai.

L'invention fournit aussi un dispositif de localisation d'une source de rayonnement électromagnétique, caractérisé par le fait qu'il comporte :

un module d'acquisition connectable à plusieurs capteurs de rayonnement électromagnétique pour enregistrer des signaux de mesure desdits capteurs dans le domaine temporel,
un module d'analyse fréquentielle apte à analyser lesdits signaux de mesure de manière à déterminer, dans chacun desdits signaux de mesure, la phase d'une composante fréquentielle respective correspondant à une fréquence déterminée,
un module de localisation pour déterminer la position d'une source de rayonnement à ladite fréquence déterminée en fonction des positions desdits capteurs et des phases desdites composantes.

De préférence, le dispositif selon l'invention comporte en outre des moyens d'entrée de fréquence pour fournir ladite fréquence déterminée audit module d'analyse fréquentielle.

Avantageusement, lesdits moyens d'entrée de fréquence incluent un analyseur de spectre connectable à un capteur de rayonnement électromagnétique pour déterminer un spectre du rayonnement détecté par ledit capteur et des moyens de sélection pour sélectionner ladite fréquence dans ledit spectre. Par exemple, les moyens d'entrée de fréquence peuvent balayer par intervalles tout le spectre de rayonnement déterminé par l'analyseur de spectre pour fournir automatiquement une série de fréquences audit module d'analyse fréquentielle. Selon un autre exemple, les moyens d'entrée de fréquence sont aptes à sélectionner les fréquences de ce spectre qui contribuent le plus significativement à l'énergie du rayonnement détecté.

Selon un mode de réalisation particulier, les moyens de sélection sont aptes à comparer ledit spectre à un gabarit prédéterminé et à sélectionner une fréquence pour laquelle une raie dudit spectre dépasse ledit gabarit. Avantageusement, les moyens de sélection sélectionnent toutes les fréquences pour lesquelles une raie du spectre mesuré dépasse le gabarit prédéterminé, qui peut être par exemple d'origine réglementaire.

Avantageusement, le dispositif selon l'invention inclut un oscilloscope numérique en tant que module d'acquisition. Avec un oscilloscope numérique récent pouvant échantillonner un signal à 20GHz, on peut récupérer simultanément, dans une gamme de fréquences étendue, compatible avec celle exploitable par le moyen d'essais en CEM, l'ensemble des signaux de mesure dans le domaine temporel en conservant toute l'information de phase et d'amplitude de chaque composante spectrale de rayonnement mise en évidence par les capteurs. L'utilisation d'un oscilloscope numérique permet également d'exploiter en temps réel les différents signaux en appliquant des algorithmes de traitement du signal, dans un environnement de banc de mesure automatisé.

Selon un mode de réalisation particulier, le dispositif selon l'invention se présente sous la forme d'un appareil unitaire incluant ledit module d'acquisition, ledit module d'analyse fréquentielle et ledit module de localisation. On peut ainsi réaliser un scanner de rayonnement de conception compacte et de fonctionnement autonome.

Selon un mode de réalisation particulier, le dispositif selon l'invention comporte une enceinte d'essai en compatibilité électromagnétique munie de capteurs reliés audit module d'acquisition.

De préférence, le dispositif selon l'invention comporte une interface graphique pour représenter la position de la ou chaque source dans un repère géométrique. Le repère géométrique peut être mono- bi-ou tridimensionnel selon l'application. Par exemple, le repère géométrique peut être défini en fonction des positions des capteurs ou en fonction d'une enceinte d'essai dans laquelle le rayonnement est mesuré. De préférence, le repère est défini par rapport à l'équipement sous test.

L'invention fournit également un programme d'ordinateur comprenant des codes d'instructions pouvant être lus ou écrits sur un support et pouvant être exécutés par un ordinateur pour effectuer les étapes consistant à :

analyser des signaux de mesure de capteurs présentés dans le domaine temporel de manière à calculer, dans chacun desdits signaux, la phase d'une composante fréquentielle respective correspondant à une fréquence déterminée,
calculer la position d'une source de rayonnement à ladite fréquence déterminée en fonction des positions desdits capteurs et des phases desdites composantes.

Avantageusement, le programme selon l'invention peut être exécuté pour effectuer en outre les étapes consistant à déterminer un spectre d'au moins un desdits signaux de mesure et sélectionner ladite fréquence dans ledit spectre.

De préférence, le programme selon l'invention peut être exécuté pour effectuer en outre l'étape consistant à former une image représentant la position de ladite ou chaque source dans un repère géométrique.

Selon un mode de réalisation particulier, le programme selon l'invention peut être exécuté pour effectuer en outre les étapes consistant à sélectionner une série de fréquences dans ledit spectre et répéter les étapes de calcul de phase et de calcul de position pour chaque fréquence de ladite série de fréquences.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :

- la figure 1 est un diagramme représentant les plages de fréquence de fonctionnement de divers moyens d'essais en CEM connus,
- les figures 2 et 3 représentent un dispositif expérimental de mesure de phase utile à la compréhension de l'invention,

- la figure 4 représente un dispositif convenant pour la mise en oeuvre du premier mode de réalisation du procédé selon l'invention,
- la figure 5 est un organigramme représentant les principales étapes du fonctionnement du dispositif de la figure 4,
- la figure 6 est un organigramme représentant une étape de sélection de fréquence selon une variante du procédé de la figure 5,
- la figure 7 représente un dispositif convenant pour la mise en oeuvre du deuxième mode de réalisation du procédé selon l'invention,
- la figure 8 est un organigramme représentant les principales étapes du fonctionnement du dispositif de la figure 7,
- les figures 9 à 11 représentent d'autres dispositifs convenant pour la mise en oeuvre du deuxième mode de réalisation du procédé selon l'invention,
- la figure 12 représente un dispositif convenant pour la mise en oeuvre d'un troisième mode de réalisation du procédé selon l'invention,
- la figure 13 est un organigramme représentant les principales étapes du fonctionnement du dispositif de la figure 12.

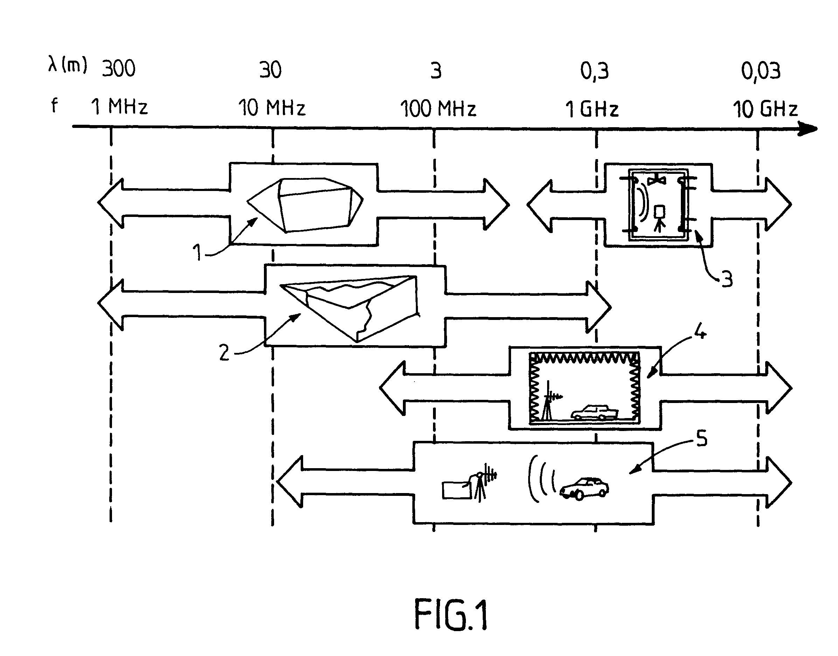

La figure 1 représente les plages de fréquence de fonctionnement de différents moyens d'essais en compatibilité électromagnétique connus. Le chiffre 1 désigne une cellule transverse électromagnétique (cellule TEM) qui comporte une structure conductrice enveloppant un volume d'essai dans lequel on peut placer un équipement à tester. La structure est munie d'une ouverture obturable et porte dans le volume d'essai un conducteur interne appelé septum. On a décrit différents types de cellule TEM dans WO 0188554. Une cellule TEM présente, en fonction des dimensions de la cavité formée par la structure métallique, une fréquence maximale de fonctionnement à partir de laquelle le mode de couplage transverse électromagnétique n'est plus vérifié du fait de l'apparition de modes de résonance.

Le chiffre 2 désigne une cellule GTEM qui est une cellule TEM de forme pyramidale dont le septum de forme triangulaire est relié, d'une part, à un connecteur placé à l'extrémité de la structure formée par le sommet de la forme pyramidale et, d'autre part, à un réseau de charges connecté à l'autre extrémité de la structure formée par la base de la forme pyramidale. Cette cellule a la singularité de posséder également un ensemble d'éléments absorbant les ondes électromagnétiques sur la paroi intérieure connectée au réseau de charges, ce qui permet de l'utiliser à des fréquences bien supérieures à celles de la cellule TEM 1.

Le chiffre 3 désigne une chambre réverbérante à brassage de modes dans laquelle les plans de couplage électromagnétiques sont produits par une multitude d'ondes électromagnétiques issues de l'antenne d'émission et réfléchies par les parois conductrices de la structure métallique. Aux fréquences de résonance de la cavité constituée par la structure, la superposition de l'ensemble de ces plans de couplage dans le volume d'essais semble conférer à l'objet sous test, quelle que soit l'orientation de celui-ci, un caractère statistiquement isotrope sur un cycle du brassage de modes.

Le chiffre 4 désigne une chambre anéchoïque qui est une enceinte métallique de grandes dimensions dont la paroi intérieure est recouverte de matériau absorbant. Le chiffre 5 désigne un dispositif de mesure de rayonnement placé dans l'espace libre (plein air). Tous les moyens d'essais représentés sur la figure 1 peuvent être adaptés pour la mise en oeuvre des procédés de localisation qui vont être décrits à titre de modes de réalisation illustratifs de l'invention ci-dessous.

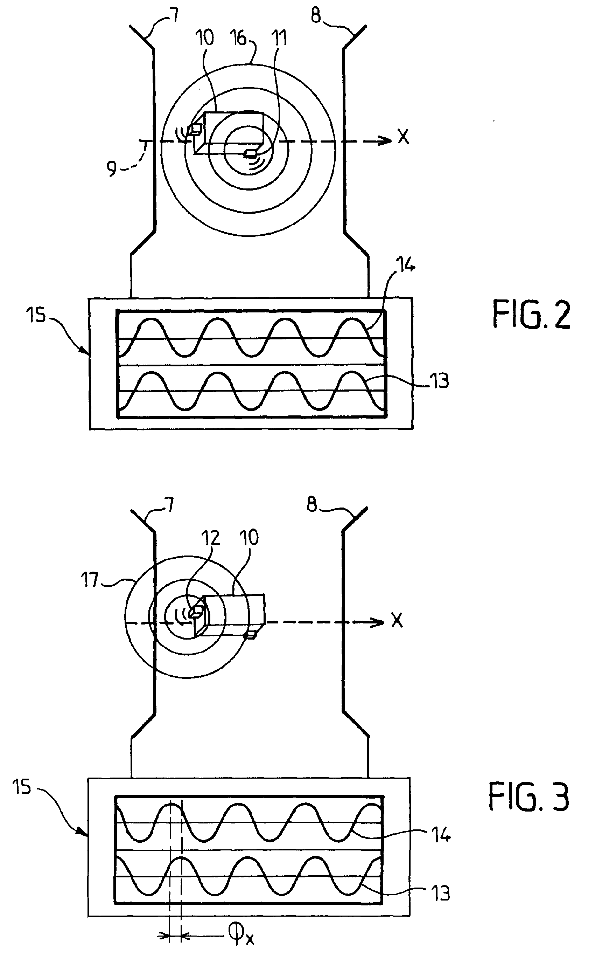

En référence aux figures 2 et 3, on décrit maintenant une expérience très simple utile à la compréhension de l'invention. On dispose de deux capteurs de champ électromagnétique 7 et 8 sous la forme d'antennes planes, qui sont disposées face à face à distance l'une de l'autre et reliées électriquement à deux entrées d'un oscilloscope 15. Sur l'axe X joignant les centres de phase des deux capteurs 7 et 8, ici représentés par les centres géométriques des antennes planes dans l'exemple représenté, on place un support 10 portant deux circuits oscillants 11 et 12 de petites dimensions capables de rayonner un champ sensiblement monochromatique. La taille du support 10 est supposée petite par rapport à l'extension transversale des capteurs 7 et 8. Dans la première étape représentée sur la figure 2, on fait rayonner uniquement la source 11 et on mesure avec l'oscilloscope 15 les tensions de sortie respectives des capteurs 7 et 8. La courbe 13 représente la tension détectée par le capteur 7 et la courbe 14 la tension détectée par le capteur 8. On constate que ces deux tensions sont en phase. En effet, le circuit oscillant 11 est disposé à mi-distance entre les deux capteurs. On comprend aisément que les lignes équiphases du champ rayonné par la source 11, qui sont représentées sous la forme d'ondes sphériques au chiffre 16, atteignent simultanément les deux capteurs 7 et 8.

Dans une deuxième étape représentée à la figure 3, on fait rayonner uniquement la source 12 qui n'est pas située à mi-distance entre les deux capteurs 7 et 8. Le chiffre 17 désigne les lignes équiphases du champ rayonné par la source 12. On constate, dans cette deuxième étape, que la courbe 13 représentant le signal de mesure du capteur 7 présente une avance de phase $\varphi_x$ sur la courbe 14 représentant le signal de mesure du capteur 8. Cette avance de phase vérifie la formule :

$$\varphi_x = 4\pi x/\lambda, \tag{1}$$

où λ désigne la longueur d'onde du rayonnement de la source 12 et x est une abscisse mesurée par rapport au point milieu des centres de phase des capteurs 7 et 8. Ainsi, on constate qu'une mesure de la différence de phases entre les signaux de mesure des capteurs 7 et 8 permet de remonter directement à la position de la source de rayonnement le long de l'axe X, lorsqu'on sait par avance que la source en question est située sensiblement sur cet axe. Par ailleurs, si l'on fait rayonner simultanément les sources 11 et 12 à deux fréquences distinctes f1 et f2, chacun des capteurs 7 et 8 produit un signal de mesure formé de la somme d'une première composante fréquentielle à la fréquence f1 de la source 11 et d'une seconde composante fréquentielle à la fréquence f2 de la source 12. Par analyse de Fourier, on sait isoler chacune de ces composantes fréquentielles et calculer sa phase respective, ce qui permet donc également de localiser les deux sources par la méthode indiquée ci-dessus lorsqu'elles rayonnent simultanément.

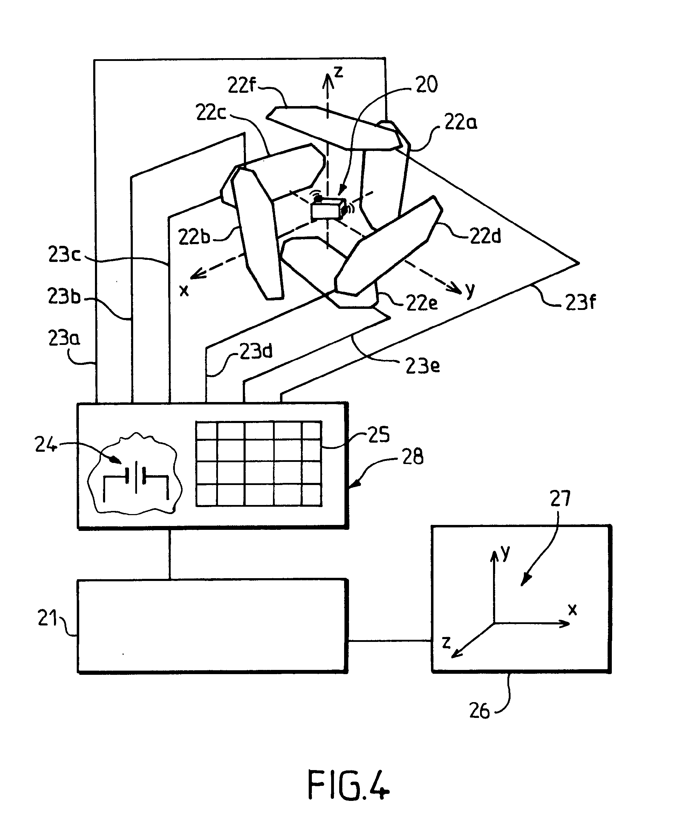

En référence à la figure 4, on décrit maintenant un dispositif de localisation fonctionnant sur la base de ce principe.

Six capteurs de champ électromagnétique 22a à 22f, sous la forme d'antennes planes, sont disposés par paires face à face à distance l'un de l'autre selon trois axes sécants mutuellement orthogonaux X, Y et Z. L'axe X joint les centres de phase des capteurs de champ électromagnétique 22a et 22b, l'axe Y ceux des capteurs de champ électromagnétique 22c et 22d et l'axe Z ceux des capteurs de champ électromagnétique 22e et 22f. Les capteurs de champ électromagnétique 22a à 22f sont reliées électriquement par des câbles blindés 23a à 23f à six entrées d'un oscilloscope numérique 28. L'oscilloscope numérique 28 est un appareil à haute cadence d'échantillonnage, pouvant échantillonner un signal par exemple à 20GHz au moins, et qui comporte, entre autres, une horloge interne 24 pour synchroniser les acquisitions de ses différentes voies et un écran 25 pour afficher des signaux. Un calculateur programmable 21, par exemple un ordinateur de type PC, est relié de manière opérationnelle à l'oscilloscope 28 et à une interface graphique 26.

Pour utiliser ce dispositif de localisation, on place au voisinage de l'intersection des axes X, Y et Z un équipement électrique 20 dont les dimensions sont supposées petites par rapport à l'extension du volume d'essai, et sur lequel on souhaite localiser avec précision les sources de rayonnement se manifestant lors de son fonctionnement. Le fonctionnement du dispositif de localisation est maintenant décrit en référence à la figure 5.

Etape 30 : l'oscilloscope 28 réalise l'acquisition simultanée des signaux de mesure des six capteurs 22a à 22f sur un intervalle de temps déterminé, avec une fréquence d'échantillonnage suffisamment haute pour scruter d'un coup une plage de fréquence de rayonnement très étendue avec un pas fin entre fréquences successives. On appelle trame temporelle l'enregistrement d'un signal sur cet intervalle de temps.

Etape 31 : dans le calculateur 21 est sélectionnée une fréquence de travail, pour laquelle on va localiser les sources de rayonnement correspondantes.

Etape 32 : par transformation de Fourier des six trames temporelles, le calculateur 21 détermine, pour chacune d'elles, la phase de la composante fréquentielle ayant la fréquence de travail sélectionnée. Un algorithme de transformée de Fourier rapide est utilisé de préférence.

Etape 33 : pour les deux signaux issus de chaque paire de capteurs, le calculateur 21 détermine la différence entre les phases obtenues à l'étape 32. Les deux composantes ayant la même fréquence, cette différence de phase ne varie pas au cours de l'intervalle de temps des trames.

Etape 34 : sur la base de l'équation (1), le calculateur 21 détermine une abscisse de source le long de chacun des axes X, Y et Z à chaque fois à partir d'une des trois différences de phases obtenues à l'étape 33. On obtient ainsi une position dans l'espace tridimensionnel qui représente l'origine du rayonnement à la fréquence de travail considérée et qui peut être affichée sous la forme d'une image 27 sur l'interface graphique 26.

Etape 35 : on itère le procédé à partir de l'étape 31 avec une autre fréquence de travail, jusqu'à localisation des sources à toutes les fréquences d'intérêt.

A l'étape 31, on peut entrer manuellement une valeur de fréquence sur une interface d'entrée du calculateur 21, ou une plage de fréquences que le calculateur 21 va balayer de manière échantillonnée.

Dans un mode de réalisation avantageux pour une application de diagnostic de rayonnement, l'étape 31 est effectuée conformément à la figure 6. A l'étape 36, on détermine le spectre fréquence-amplitude du rayonnement global de l'équipement 20 à partir du signal de mesure d'au moins un des capteurs et on fournit ce spectre au calculateur 21. Ce spectre est calculé par un analyseur de spectre qui peut être l'oscilloscope 28 lui-même, programmé de manière correspondante, ou par un appareil de type connu séparé (non représenté). A l'étape 37, le calculateur 21 compare ce spectre à un gabarit normalisé préenregistré, qui définit l'amplitude maximale admissible pour chaque fréquence. A l'étape 38, la fréquence de travail est choisie parmi les raies du spectre qui dépassent ce gabarit.

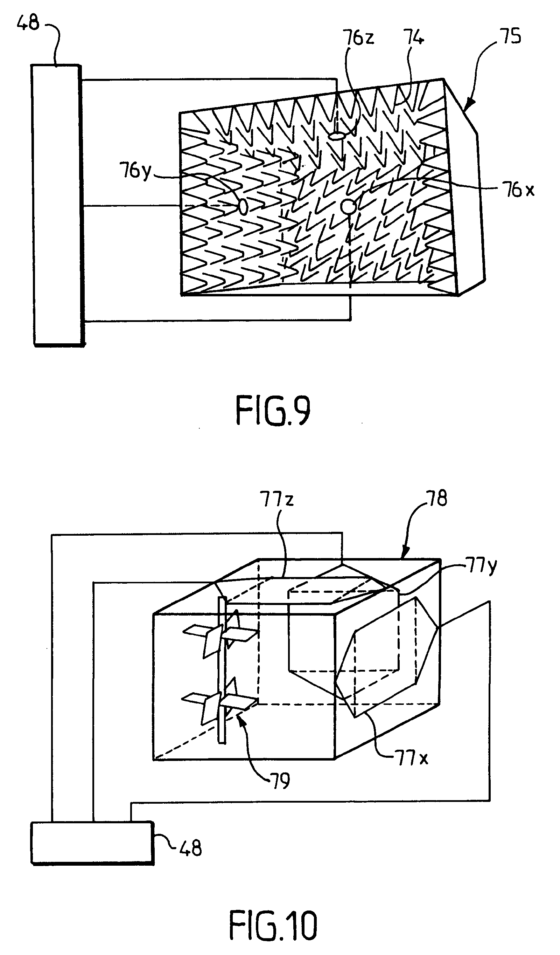

Une configuration des capteurs telle que représentée sur la figure 4 est avantageusement fournie par les septa de la cellule TEM décrite dans WO 0188554 (Figure 9) en prévoyant des charges d'adaptation aux ports de la cellule non utilisés pour éviter la réflexion de l'énergie. Toutefois, tout autre capteur de champ électrique ou magnétique peut être branché à l'extrémité des câbles de liaison 23a à 23f. À cet égard, les septa d'une cellule TEM ne sont qu'un exemple nullement limitatif. Les capteurs de champ n'ont pas nécessairement une forme plane.

L'oscilloscope 28 et le calculateur 21, ainsi que l'interface graphique 26 éventuellement, peuvent être intégrés dans un appareil unitaire plus compact, sous la forme d'un scanner de rayonnement présentant le fonctionnement indiqué ci-dessus.

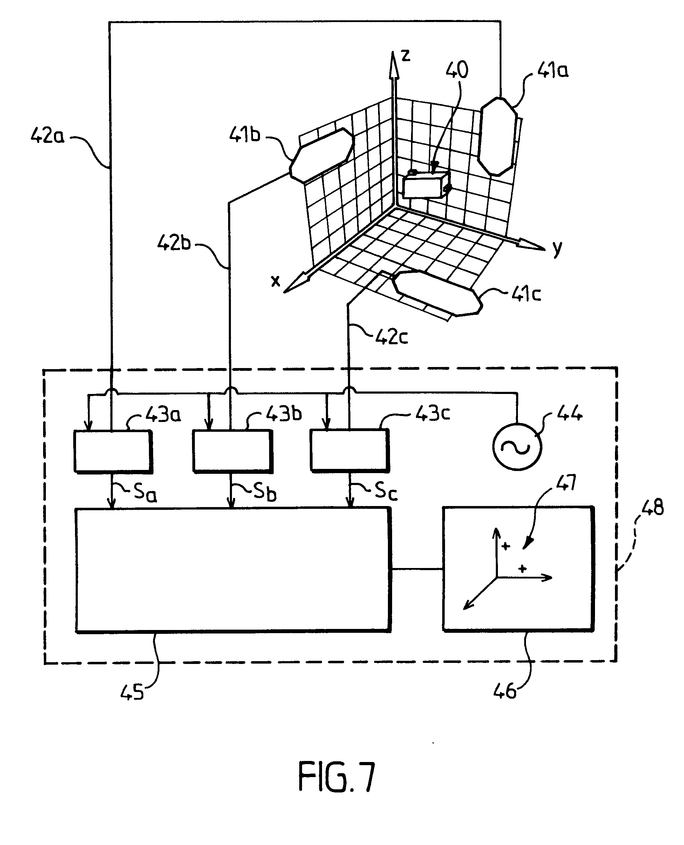

En référence à la figure 7, on décrit maintenant un deuxième mode de réalisation du dispositif de localisation, permettant de s'affranchir de certaines contraintes de taille et de positionnement de l'équipement sous test.

Dans ce mode de réalisation, trois capteurs de champ électromagnétique 41 a à 41 c sous la forme d'antennes planes sont disposés à des positions bien déterminées non alignées, par exemple dans une enceinte d'essai en CEM, de manière à pouvoir détecter des champs électromagnétiques provenant d'un volume d'essai s'étendant entre les capteurs. A une position quelconque dans ce volume d'essai, on place un équipement électrique 40 de taille quelconque susceptible de rayonner en fonctionnement, et sur lequel on souhaite localiser les zones rayonnantes.

Les capteurs de champ électromagnétique génériques 41a à 41c, ici représentés par des antennes planes à titre d'exemple, sont respectivement reliés par des câbles blindés 42a à 42c à des convertisseurs analogiques numériques 43a à 43c fonctionnant à très haute cadence d'échantillonnage, par exemple 20GHz. Un oscillateur de référence 44 est connecté aux convertisseurs analogiques numériques 43a à 43c pour pouvoir réaliser des acquisitions synchronisées. Les sorties des convertisseurs analogiques numériques 43a à 43c sont connectées à un calculateur numérique programmable 45 reliée à une interface graphique 46. Les convertisseurs 43a à 43c, l'oscillateur 44 et le calculateur 45, avec ou sans l'interface 46, sont de préférence intégrés dans un appareil unitaire compact 48 (scanner de rayonnement) muni de connecteurs d'entrée pour brancher les capteurs. En variante, l'oscillateur de référence 44 peut être extérieur à l'appareil.

Le fonctionnement du dispositif de localisation est maintenant décrit en référence à la figure 8. Les étapes 50 à 52 et 55 sont similaires aux étapes 30 à 32 et 35 du fonctionnement du premier mode de réalisation.

Etape 50 : acquisition simultanée par les convertisseurs 43a à 43c des signaux de mesure Sa, Sb et Sc des trois capteurs 41 a à 41 c sur un intervalle de temps déterminé. Ces mesures sont stockées dans une mémoire du calculateur 45.

Etape 51 : sélection d'une fréquence de travail par le calculateur 45.

Etape 52: pour chacun des trois signaux de mesure, le calculateur 45 détermine la phase de la composante fréquentielle ayant la fréquence de travail, soit $\varphi_a$ , $\varphi_b$ , $\varphi_c$

Etape 53 : le calculateur 45 détermine une position de source *(x, y,* z) dans l'espace tridimensionnel par la technique des différences de temps d'arrivée des ondes au niveau des trois capteurs.

Etape 54 : affichage de cette position sous la forme d'une image 47 sur l'interface graphique 46.

Etape 55 : itération du procédé à partir de l'étape 51 avec une autre fréquence de travail, jusqu'à localisation des sources à toutes les fréquences d'intérêt.

La technique des différences de temps d'arrivée consiste à résoudre un système de trois équations hyperboliques de la forme :

$$\left(\varphi_i - \varphi_j\right)/2\pi = \left(\sqrt{\left(X_i - x\right)^2 + \left(Y_i - y\right)^2 + \left(Z_i - z\right)^2} - \sqrt{\left(X_j - x\right)^2 + \left(Y_j - y\right)^2 + \left(Z_j - z\right)^2}\right)/\lambda$$

où les indices *i* et *j* sont choisis à chaque fois dans l'ensemble (a, b, c) et où ($X_i$ $Y_i$ $Z_j$) désignent les coordonnées du centre de phase du capteur 41 *i*. En d'autres termes, on localise la source de rayonnement à l'intersection de trois surfaces hyperboliques dont les foyers sont à chaque fois les centres de phase d'un couple distinct de capteur.

En pratique, la localisation de la source peut être obtenue avec une précision d'une fraction, par exemple un dixième à un centième, de la longueur d'onde λ. Toutefois, plus une précision importante est requise, plus le calibrage préalable du dispositif doit être minutieux. Pour calibrer l'appareil, on peut envisager plusieurs opérations :

- émettre un rayonnement prédéterminé de fréquence connue depuis l'un des capteurs et mesurer la phase du signal correspondant reçu par les autres capteurs, pour caractériser précisément les distances entre capteurs,

- éventuellement caractériser précisément la position du centre de phase de chaque capteur, ce qui est d'autant plus critique que le capteur est de grande taille.

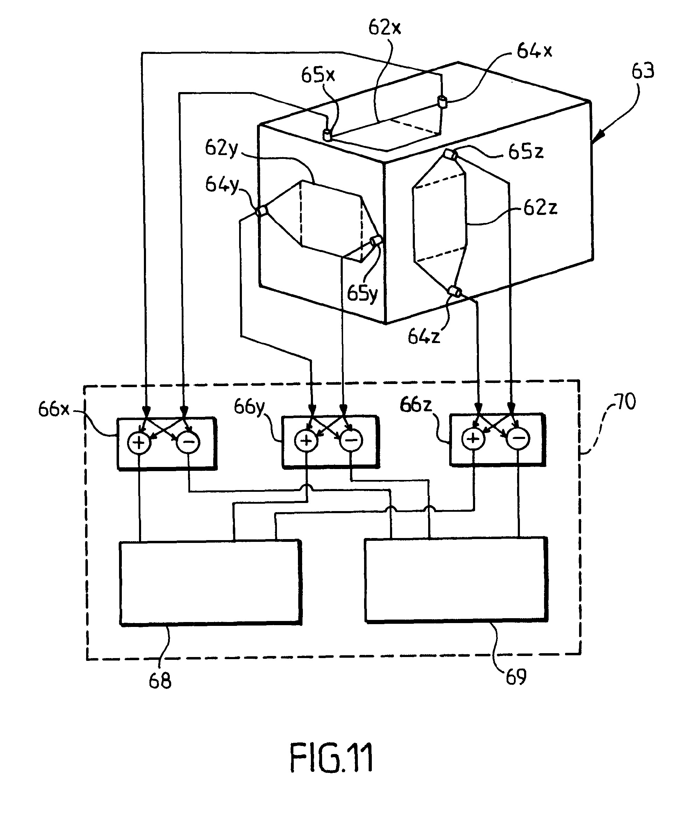

Une configuration des capteurs telle que représentée sur la figure 7 est avantageusement fournie par les septa de la cellule TEM-3D décrite dans WO 0188554 (Figures 11) en prévoyant des charges d'adaptation aux ports de la cellule non utilisés. Toutefois, ceci ne constitue qu'un exemple de capteurs et d'environnement de mesure parmi d'autres.

Sur la figure 9, on a représenté l'appareil 48 connecté à trois capteurs 76x à 76z placés dans une chambre anéchoïque 75, vue en coupe, dont les parois sont revêtues d'éléments absorbants 74 sur leur face intérieure. Une telle enceinte présente l'avantage de pouvoir être réalisée avec de très grandes dimensions, permettant par exemple de contenir une automobile ou un avion. On peut donc procéder à la localisation des sources sur ou dans ce type d'équipements de grande dimension sans le démonter. Ainsi, le diagnostic de rayonnement de l'équipement est effectué dans la configuration finale de l'équipement, ce qui assure la pertinence des résultats.

Sur la figure 10, on a représenté l'appareil 48 connecté à trois septa 77x à 77z placés dans une chambre réverbérante à brassage de modes 78, vue en transparence, contenant un réflecteur de brassage ou brasseur de modes 79. De manière plus générale, on peut utiliser des capteurs installés au sein de toute enceinte d'essai en CEM, par exemple une cavité métallique définissant un volume clos et recouverte le cas échéant de matériaux absorbants. De préférence, les capteurs sont placés proches des parois de l'enceinte d'essai, absorbantes ou non, et centrés sur ces parois. Les capteurs peuvent aussi être placés en plein air. Au lieu de trois capteurs placés sur des faces mutuellement perpendiculaires de l'enceinte d'essai, le nombre de capteurs peut être porté à au moins un capteur par face du volume d'essai, ce qui améliore la précision de la localisation.

Dans les modes de réalisation représentés sur les figures 4 et 7, la possibilité d'utiliser une cellule TEM-3D conforme à WO 0188554, c'est-à-dire dans laquelle les plans de couplage électromagnétique des septa sont deux à deux distincts et non parallèles, présente l'avantage supplémentaire d'offrir une sensibilité distincte au champ électrique et au champ magnétique présents dans le volume d'essai. En effet, on peut mettre en évidence séparément les composantes électrique et magnétique via les signaux accessibles aux deux ports d'accès de chacun des septa. La figure 11 représente un mode de réalisation du dispositif de localisation permettant d'exploiter cette propriété.

La cellule TEM 63 est conforme au mode de réalisation représenté sur la figure 5a de WO 0188554. On sait que la somme et la différence des signaux complexes présents respectivement en extrémité des septa 62x à 62z permet, pour chaque fréquence, d'identifier un couplage de type électrique ou magnétique selon le procédé décrit dans WO 0120353 et donc la nature de la source. Sur la figure 11, les modules 68 et 69 représentent des appareils similaires à l'appareil 48 du deuxième mode de réalisation ci-dessus. Toutefois, un circuit de combinaison 66i (i=x à z) est à chaque fois interposé entre le septum 62i et les modules 68 et 69 de manière à fournir aux entrées du module 68 la somme des tensions présentes aux deux bornes 64i et 65i de chaque septum 62i et aux entrées du module 69 la différence entre ces tensions. Ainsi, par un fonctionnement similaire à celui décrit en référence à la figure 8, le module 68 établit une cartographie des sources électriques et le module 69 établit une cartographie des sources magnétiques. Là encore, le dispositif de localisation est de préférence réalisé sous la forme d'un appareil unitaire compact 70.

Des circuits de combinaison identiques peuvent être interposés entre les septa de la cellule représentée sur la figure 9 de WO 0188554 et des appareil de localisation conforme au premier mode de réalisation ci-dessus pour, là encore, déterminer la nature des sources en plus de leurs positions. Du fait de la disposition des septa, cette cellule permet en outre de mesurer la puissance totale rayonnée par l'équipement.

Pour déterminer la nature des sources, une autre possibilité est d'utiliser un dispositif de localisation selon le premier ou le deuxième mode de réalisation muni de capteurs sensibles spécifiquement au champ magnétique pour établir une cartographie des sources magnétiques ou de capteurs sensibles spécifiquement au champ électrique pour établir une cartographie des sources électriques.

L'enregistrement simultané de tous les signaux de mesure est avantageux pour accélérer le procédé de localisation selon l'invention, mais il n'est pas indispensable. En fait, il suffit de pouvoir enregistrer deux signaux de mesures simultanément dans le domaine temporel pour exécuter le procédé de localisation. Ainsi, dans une version simplifiée, on peut prévoir que le moyen d'acquisition ne dispose que de deux voies d'entrée et ne peut donc être relié qu'à deux capteurs à la fois, comme dans les figures 2 et 3. Dans le mode de réalisation de la figure 4 ainsi modifié, on réalise alors trois séries d'acquisition successives en changeant de branchement à chaque fois : la première série avec les capteurs 22a et 22b, avec lesquels on enregistre deux trames temporelles, permet de calculer la coordonnée x, la deuxième série avec les capteurs 22c et 22d permet de calculer la coordonnée y, etc. Dans le mode de réalisation de la figure 7 ainsi modifié, on réalise alors trois séries d'acquisition successives en changeant de branchement à chaque fois : la première série avec les capteurs 41a et 41b, avec lesquels on enregistre deux trames temporelles, permet d'établir une première équation hyperbolique à résoudre, la deuxième série avec les capteurs 41b et 41c permet d'établir une deuxième équation hyperbolique à résoudre, etc.

La longueur des trames temporelles est choisie en fonction de la borne inférieure de la fréquence de travail. On enregistrera de préférence plusieurs périodes du rayonnement de plus basse fréquence dont on souhaite localiser la source. L'échantillonnage de l'acquisition est supérieur ou égal à deux fois la plus haute fréquence du rayonnement dont on souhaite localiser la source.

Dans tous les modes de réalisation, on constatera que la position obtenue pour une fréquence donnée résulte de l'ensemble des zones de l'équipement qui rayonnent à cette fréquence. Ainsi, si plusieurs zones séparées rayonnent à la même fréquence, on obtient généralement la position d'une source équivalente représentant un barycentre de ces différentes zones.

Dans les modes de réalisation décrits ci-dessus, on étudie le rayonnement produit par un équipement lors de son fonctionnement. Cette manière de procéder permet de vérifier la conformité d'un équipement déjà fabriqué aux normes de CEM. Toutefois, il peut aussi être souhaitable d'arriver à prédire comment une modification de l'équipement faisant l'objet de l'essai est susceptible de modifier la cartographie de son rayonnement.

Par exemple, si l'on considère une automobile munie d'électronique embarquée, le procédé de localisation peut être mené dans une chambre anéchoïque en faisant fonctionner les systèmes électroniques. On obtient ainsi une carte des sources de rayonnement apparentes sur le véhicule (par exemple des fentes de la carrosserie, des points saillants, une antenne radio, etc...) à toutes les fréquences produites par le fonctionnement des systèmes embarqués. Toutefois, si l'on modifie par la suite l'électronique embarquée et qu'on ajoute un circuit produisant des fréquences qui n'étaient pas dans le spectre de la première version du véhicule, il sera difficile de prédire à quels éléments structurels ces nouvelles fréquences sont susceptibles de se coupler et donc en quelles zones du véhicule elles risquent de donner lieu à un rayonnement sortant.

Pour améliorer le caractère prédictif d'un essai, on peut, au lieu de mesurer le rayonnement produit par le fonctionnement de l'équipement sous test, ajouter dans l'équipement en question un circuit destiné à produire artificiellement un rayonnement primaire bien maîtrisé, dont le spectre pourra avantageusement être choisi très large. Ainsi, un essai pourra couvrir un spectre plus large que celui de l'équipement en fonctionnement. Par exemple, on peut choisir une source primaire émettant un signal impulsionnel, ou en palier, ou sinusoïdal à fréquence lentement variable ou gaussien.

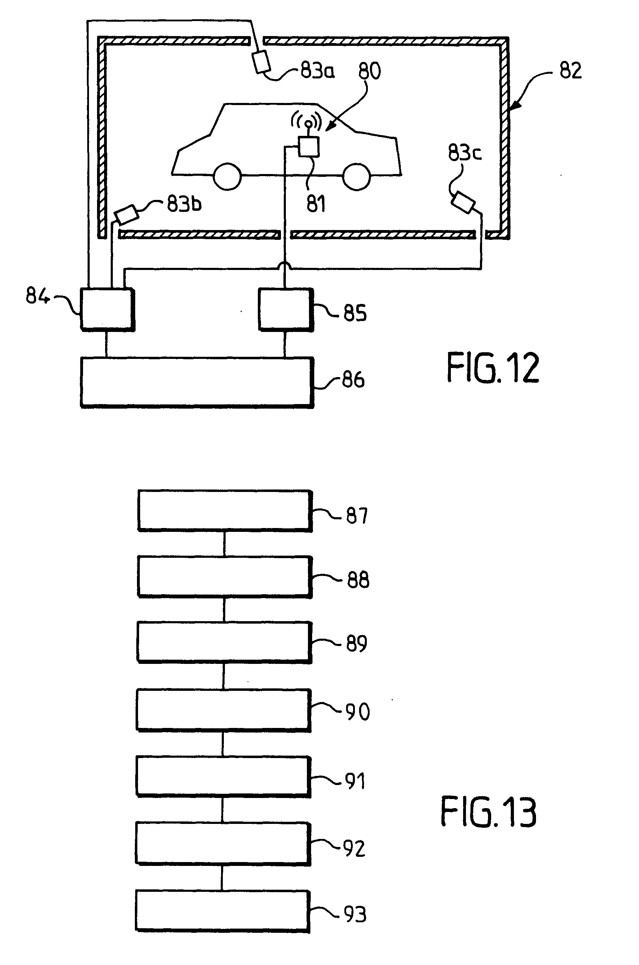

L'ajout d'une source de rayonnement primaire, que l'on déclenche volontairement et dont on connaît par avance le rayonnement, permet en outre d'effectuer une localisation des sources secondaires sur l'équipement par mesure absolue des temps de vol des ondes depuis l'équipement jusqu'aux capteurs. La figure 12 représente un mode de réalisation correspondant au dispositif de localisation. Un émetteur 81, dont le rayonnement est bien caractérisé, est placé à l'intérieur d'un équipement 80, par exemple un véhicule automobile, sur lequel on souhaite localiser les zones rayonnantes. L'équipement 80 est placé dans une enceinte d'essai en CEM 82 munie de plusieurs, par exemple trois, capteurs de rayonnement électromagnétique 83a à 83c. Les capteurs sont reliés aux entrées d'un module d'acquisition 84, par exemple un oscilloscope numérique, lui-même relié à un module de contrôle 86. Le module de contrôle 86 est muni de moyens de calcul et est relié à l'émetteur 81 par l'intermédiaire d'une interface de pilotage 85. Le fonctionnement du dispositif est décrit maintenant en référence à la figure 13.

Etape 87: acquisition simultanée par le module d'acquisition 84 de trames temporelles des signaux de mesure des trois capteurs 83a à 83c.

Etape 88 : déclenchement de l'émetteur 81 par le module de contrôle 86 pendant l'acquisition des trames temporelles et enregistrement de l'instant correspondant $t_0$.

Etape 89 : sélection d'une fréquence de travail faisant partie du spectre d'émission de l'émetteur 81, connu par avance, par le module de contrôle 86.

Etape 90 : par analyse spectrale de chacun des trois signaux de mesure, le module de contrôle 86 détermine la phase de la composante fréquentielle ayant la fréquence de travail, soit $\varphi_a$ , $\varphi_b$ , $\varphi_c$

Etape 91 : pour chacun des capteurs 83i (i=a à c), le module de contrôle 86 détermine le temps d'arrivée de la composante fréquentielle en question au niveau du capteur par différence entre la phase $\varphi_i$ et la phase de la même composante fréquentielle dans le signal émis, que l'on a déterminée auparavant par analyse de Fourier du signal de l'émetteur 81.

Etape 92 : détermination du temps de vol de l'onde entre la source secondaire à localiser et chaque capteur, par différence entre le temps d'arrivée déterminé à l'étape 91 et un temps de départ. Le temps de départ est égal à $t_0+t_1$ où $t_1$ est un retard représentant la propagation de la perturbation électromagnétique entre l'émetteur 81 et la zone du véhicule depuis laquelle cette perturbation va être rayonnée à l'extérieur. Le retard $t_1$ est déterminé par calibrage. Ce calibrage peut, à titre d'exemple, être effectué en disposant initialement la source de rayonnement à l'endroit qu'elle occuperait physiquement à l'intérieur de l'équipement sous test mais en absence physique de cet équipement sous test afin de déterminer les temps de référence absolus de propagation entre la source primaire et les différents capteurs.

Etape 93 : le module de contrôle 86 détermine une position de source *(x, y, z)* dans l'espace tridimensionnel par l'intersection de trois sphères dont les rayons correspondent aux temps de vol au niveau des trois capteurs.

Par rapport aux modes de réalisation représentés, le nombre de capteurs peut être réduit lorsque la dimensionnalité du problème de localisation est réduite, c'est-à-dire quand la source à localiser est sur une surface ou sur une ligne prédéterminée. Le nombre de capteurs peut aussi être accru pour fournir des informations redondantes permettant d'affiner la localisation.

Les calculateurs 21 et 45 peuvent être réalisés sous la forme de circuits programmables usuels programmés spécifiquement de manière à effectuer les étapes décrites, ou bien sous la forme de circuits dont la conception matérielle est spécifiquement adaptée à l'exécution des étapes décrites, ou encore sous la forme d'une combinaison de ces deux types de circuits.

Les dispositifs de localisation décrits ci-dessus présentent de nombreux avantages : ils permettent de localiser l'ensemble des sources de rayonnement sur ou dans un équipement dans une gamme de fréquence très étendue ; il s'adaptent à différents moyens d'essai en CEM existants ; il permettent de visualiser en temps réel la cartographie des sources de rayonnement équivalentes fréquence par fréquence.

Comme mentionné en introduction, la caractéristique physique de l'équipement sous test qui s'avère la plus importante en matière de compatibilité électromagnétique est le champ effectivement rayonné dans l'environnement à grande distance de l'équipement. Traditionnellement, on désigne par champ lointain le champ qui existe à une distance $\ell$ de la source supérieure à une ou quelques longueurs d'ondes, par exemple $\ell > 3\lambda$.

En pratique, il est délicat de chercher à déterminer le champ lointain par le calcul à partir de la mesure du champ proche car un tel calcul n'est pas robuste. Le champ proche est généralement très sensible à l'environnement de l'équipement, de sorte que le champ proche mesuré peut être influencé par le dispositif de mesure. Dans ce cas, le champ lointain obtenu par le calcul ne reflète pas le rayonnement réel de l'équipement dans des conditions normales, i.e. sans l'influence du dispositif de mesure.

Pour ces raisons, dans l'invention, on réalise de préférence des mesures de champ électromagnétique représentant directement le champ lointain de l'équipement sous test, du moins dans la partie haute de la plage de fréquence de travail, avantageusement dans la majeure partie de la plage de fréquence de travail. Cette condition s'avère d'autant plus difficile à satisfaire que la fréquence de travail est choisie basse, de sorte qu'elle ne peut pas toujours être vérifiée sur toute la plage de fréquence de travail, même si l'on prévoit par exemple une distance minimale de l'ordre du mètre entre les capteurs et l'équipement sous test. Toutefois, la plage de fréquence de travail est limitée vers le bas par d'autres considérations, comme la précision de la mesure de position obtenue et, dans le cas de mise en oeuvre dans un moyen d'essai, la fréquence de coupure en deçà de laquelle le moyen d'essai n'est plus efficace, par exemple 10 à 30 MHz dans le cas d'une chambre anéchoïque.

De préférence, pour limiter le couplage électromagnétique entre les capteurs et l'équipement sous test et donc la perturbation du rayonnement de cet équipement par les capteurs, la distance entre capteur et équipement est choisie supérieure aux dimensions de l'équipement sous test.

Dans les basses fréquences, par exemple en dessous de 10 MHz, on préfère des capteurs de champ magnétique qui peuvent être des boucles de petite taille, plutôt que des antennes électriques qui auront généralement une plus grande taille. Inversement, à haute fréquence, on peut facilement utiliser des capteurs sensibles à la fois au champ électrique et au champ magnétique ou des antennes électriques de dimension acceptable.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

**Revendications**

1. Procédé de localisation d'une source de rayonnement électromagnétique sur ou dans un équipement électrique (20, 40), **caractérisé par le fait qu'**il comporte les étapes consistant à :

   disposer ledit équipement dans son ensemble dans une zone de détection commune à au moins trois capteurs de rayonnement électromagnétique (22a-f, 41a-c, 76x-z, 77x-z, 62x-z) placés à des positions déterminées non alignées, et produire un rayonnement depuis ledit équipement,
   enregistrer (30, 50) un signal de mesure respectif de chacun desdits capteurs dans le domaine temporel,
   sélectionner (31, 51) une fréquence à laquelle est produit un rayonnement détectable par lesdits capteurs,
   dans chacun desdits signaux de mesure, déterminer (32, 52) la phase d'une composante fréquentielle respective correspondant à ladite fréquence sélectionnée,
   localiser (33-34, 53) une source dudit rayonnement à la fréquence sélectionnée dans l'espace tridimensionnel en fonction des positions desdits capteurs et des phases desdites composantes.

2. Procédé selon la revendication 1, dans lequel lesdits signaux de mesure sont enregistrés sous la forme de trames temporelles respectives, la trame temporelle d'un desdits signaux de mesure étant à chaque fois enregistrée simultanément avec la trame temporelle d'au moins un autre desdits signaux de mesure, les phases desdites composantes fréquentielles étant déterminées par transformation de Fourier desdites trames temporelles.

3. Procédé selon la revendication 2, **caractérisé par** l'étape consistant à calculer (33, 53) une différence de phase entre les composantes fréquentielles issues de deux trames temporelles enregistrées simultanément.

4. Procédé selon la revendication 3, **caractérisé par le fait qu'**on dispose ledit équipement (20) sensiblement sur un axe géométrique (X, Y, Z) passant par le centre de phase respectif des deux capteurs (22a-b, 22c-d, 22e-f) dont proviennent lesdites deux trames temporelles enregistrées simultanément et qu'on détermine une position de ladite source le long dudit axe géométrique directement à partir de ladite différence de phase.

**5.** Procédé selon la revendication 3 ou 4, dans lequel on localise la source du rayonnement sur au moins une espèce géométrique hyperbolique correspondant à ladite au moins une différence de phase.

**6.** Procédé selon la revendication 5, **caractérisé par le fait qu'**on utilise trois capteurs (41a-c) et qu'on calcule trois différences de phase à chaque fois entre les composantes fréquentielles issues de deux trames temporelles enregistrées simultanément par une paire de capteurs distincte et qu'on localise ladite source par résolution de trois équations hyperboliques, correspondant respectivement auxdites différences de phases calculées.

**7.** Procédé selon l'une des revendications 1 à 6, **caractérisé par le fait qu'**on place ledit équipement et lesdits capteurs dans une enceinte close d'essai en compatibilité électromagnétique (1, 2, 3, 4, 63, 75, 78).

**8.** Procédé selon l'une des revendications 1 à 7, **caractérisé par** l'étape consistant à déterminer (36) un spectre de rayonnement dudit équipement à partir du signal de mesure d'au moins un desdits capteurs, ladite fréquence étant sélectionnée dans ledit spectre.

**9.** Procédé selon la revendication 8, **caractérisé par le fait qu'**on compare (37) ledit spectre à un gabarit prédéterminé et qu'on sélectionne (38) une fréquence pour laquelle une raie dudit spectre dépasse ledit gabarit.

**10.** Procédé selon l'une des revendications 1 à 9, **caractérisé par le fait qu'**on répète (35, 55) les étapes de détermination de phase et de localisation de source pour plusieurs fréquences.

**11.** Procédé selon l'une des revendications 1 à 10, dans lequel ledit rayonnement est produit en faisant fonctionner ledit équipement.

**12.** Procédé selon l'une des revendications 1 à 10, **caractérisé par** l'étape consistant à ajouter une source de rayonnement primaire à l'intérieur dudit équipement.

**13.** Procédé selon l'une des revendications 1 à 12, **caractérisé par le fait que** lesdits capteurs sont placés de manière à détecter un rayonnement de champ lointain de l'équipement électrique.

**14.** Dispositif de localisation d'une source de rayonnement électromagnétique, **caractérisé par le fait qu'**il comporte :

un module d'acquisition (28, 43a-c) connectable à au moins trois capteurs de rayonnement électromagnétique (22a-f, 41a-c) placés à des positions déterminées non alignées pour enregistrer des signaux de mesure (Sa-Sc) desdits capteurs dans le domaine temporel, un module d'analyse fréquentielle (21, 45) apte à analyser lesdits signaux de mesure de manière à déterminer, dans chacun desdits signaux de mesure, la phase d'une composante fréquentielle respective correspondant à une fréquence déterminée, un module de localisation (21, 45) pour déterminer la position d'une source de rayonnement à ladite fréquence déterminée dans l'espace tridimensionnel en fonction des positions desdits capteurs et des phases desdites composantes.

**15.** Dispositif selon la revendication 14, incluant un oscilloscope numérique (28) en tant que module d'acquisition.

**16.** Dispositif selon la revendication 14 ou 15, **caractérisé par le fait qu'**il se présente sous la forme d'un appareil unitaire (48, 70) incluant ledit module d'acquisition, ledit module d'analyse fréquentielle et ledit module de localisation.

**17.** Dispositif selon l'une des revendications 14 à 16, **caractérisé par le fait qu'**il comporte une enceinte d'essai en compatibilité électromagnétique (63, 75, 78) munie de capteurs (62x-z, 76x-z, 77x-z) reliés audit module d'acquisition.

**18.** Dispositif selon l'une des revendications 14 à 17, **caractérisé par le fait qu'**il comporte une interface graphique (26, 46) pour représenter la position de ladite ou chaque source dans un repère géométrique.

**19.** Programme d'ordinateur comprenant des codes d'instructions pouvant être lus ou écrits sur un support et pouvant être exécutés par un ordinateur pour effecteur les étapes consistant à :

analyser (32, 52) des signaux de mesure (Sa-Sc) d'au moins trois capteurs placés à des positions déterminées non alignées (22a-f, 41a-c) présentés dans le domaine temporel de manière à calculer, dans chacun desdits signaux, la phase d'une composante fréquentielle respective correspondant à une fréquence déterminée, calculer (33-34, 53) la position d'une source de rayonnement à ladite fréquence déterminée dans l'espace tridimensionnel en fonction des positions desdits capteurs et des phases desdites composantes.

20. Programme d'ordinateur selon la revendication 19, pouvant être exécuté pour effectuer en outre les étapes consistant à déterminer (36) un spectre d'au moins un desdits signaux de mesure et sélectionner ladite fréquence dans ledit spectre.

21. Programme d'ordinateur selon la revendication 19 ou 20, pouvant être exécuté pour effectuer en outre l'étape consistant à former une image (27, 47) représentant la position de ladite ou chaque source dans un repère géométrique.

FIG.1

FIG.2

FIG.3

FIG.4

FIG.5

FIG. 6

FIG.8

FIG.7

FIG.9

FIG.10

FIG.11

FIG.12

FIG.13

# EP 1 605 276 A1

**Office européen des brevets**

## RAPPORT DE RECHERCHE EUROPEENNE

Numéro de la demande

EP 05 29 1159

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | US 6 700 536 B1 (WIEGAND RICHARD J) 2 mars 2004 (2004-03-02) | 14-16, 18-21 | G01S5/06 G01R29/08 |
| A | * colonne 10, ligne 39 - colonne 12, ligne 20; figures 5A,5B,5C,5D,5E,5F,5G * ----- | 1-18 | |
| Y | LAOUFI M ET AL: "Positioning emergency calls along roads and motorways using a GSM dedicated cellular radio network" IEEE, vol. 5, 24 septembre 2000 (2000-09-24), pages 2039-2046, XP010522150 * page 2043, colonne de droite, ligne 4 - page 2045, colonne de gauche, ligne 25 * ----- | 14-16, 18-21 | |
| A | US 2002/153904 A1 (SHINBO KENICHI ET AL) 24 octobre 2002 (2002-10-24) | 1-13 | |
| Y | * abrégé; figures 1,4 * <br><br> * alinéas [0011], [0037] - [0043] * ----- | 14-16, 18-21 | |
| A | KAZAMA S ET AL: "Adjacent electric field and magnetic field distribution measurement system" 2002 IEEE INTERNATIONAL SYMPOSIUM ON ELECTROMAGNETIC COMPATIBILITY. EMC. SYMPOSIUM RECORD. MINNEAPOLIS, MN, AUG. 19 - 23, 2002, INTERNATIONL SYMPOSIUM ON ELECTROMAGNETIC COMPATIBILITY, NEW YORK, NY : IEEE, US, vol. VOL. 1 OF 2, 19 août 2002 (2002-08-19), pages 395-400, XP010603260 ISBN: 0-7803-7264-6 * page 398, colonne de gauche; figures 8.3,10 * ----- <br><br> -/-- | 1-21 | **DOMAINES TECHNIQUES RECHERCHES (Int.Cl.7)** <br><br> G01R G01S |

Le présent rapport a été établi pour toutes les revendications

| Lieu de la recherche | Date d'achèvement de la recherche | Examinateur |
|---|---|---|
| Munich | 2 août 2005 | Mercier, F |

EPO FORM 1503 03.82 (P04C02)

**Office européen**

**des brevets**

# RAPPORT DE RECHERCHE EUROPEENNE

Numéro de la demande

EP 05 29 1159

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A,D | WO 01/20353 A (FLAMME JEAN M ; RIOULT JEAN (FR); INRETS (FR); KLINGLER MARCO (FR); BO) 22 mars 2001 (2001-03-22) * le document en entier * ----- | 1-21 | |
| A,D | WO 01/88554 A (RIOULT JEAN ; INRETS (FR); KLINGLER MARCO (FR); GHYS JEAN PIERRE (FR)) 22 novembre 2001 (2001-11-22) * le document en entier * ----- | 1-21 | |
| A,D | US 5 844 414 A (OHMAN PER ET AL) 1 décembre 1998 (1998-12-01) * le document en entier * ----- | 1-21 | |
| A,D | US 5 589 773 A (BERGER H STEPHEN ET AL) 31 décembre 1996 (1996-12-31) * le document en entier * ----- | 1-21 | |
| A,D | H.HIRAYAMA Y. KAMI: ELECTROMAGNETIC COMPATIBILITY SYMPOSIUM, février 2003 (2003-02), pages 661-666, XP009042724 ZURICH * le document en entier * ----- | 1-21 | DOMAINES TECHNIQUES RECHERCHES (Int.Cl.7) |

Le présent rapport a été établi pour toutes les revendications

| Lieu de la recherche | Date d'achèvement de la recherche | Examinateur |
|---|---|---|
| Munich | 2 août 2005 | Mercier, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**     EP 05 29 1159

La présente annexe indique les membres de la  famille de brevets relatifs aux documents   brevets cités dans le rapport de
recherche européenne visé ci-dessus.
Lesdits members sont contenus au fichier informatique de l'Office  européen des brevets à la date du
Les renseignements fournis sont donnés à titre  indicatif et n'engagent pas la responsabilité  de l'Office européen des brevets.

02-08-2005

| Document brevet cité au rapport de recherche | | Date de publication | Membre(s) de la famille de brevet(s) | | Date de publication |
|---|---|---|---|---|---|
| US 6700536 | B1 | 02-03-2004 | AUCUN | | |
| US 2002153904 | A1 | 24-10-2002 | JP | 2000304790 A | 02-11-2000 |
| | | | CA | 2367732 A1 | 02-11-2000 |
| | | | CN | 1352745 A ,C | 05-06-2002 |
| | | | EP | 1174722 A1 | 23-01-2002 |
| | | | WO | 0065362 A1 | 02-11-2000 |
| | | | US | 6411104 B1 | 25-06-2002 |
| WO 0120353 | A | 22-03-2001 | FR | 2798471 A1 | 16-03-2001 |
| | | | AT | 255729 T | 15-12-2003 |
| | | | AU | 7018200 A | 17-04-2001 |
| | | | DE | 60006973 D1 | 15-01-2004 |
| | | | DE | 60006973 T2 | 28-10-2004 |
| | | | EP | 1210611 A1 | 05-06-2002 |
| | | | ES | 2211592 T3 | 16-07-2004 |
| | | | WO | 0120353 A1 | 22-03-2001 |
| WO 0188554 | A | 22-11-2001 | FR | 2809183 A1 | 23-11-2001 |
| | | | AU | 4846901 A | 26-11-2001 |
| | | | EP | 1283990 A1 | 19-02-2003 |
| | | | WO | 0188554 A1 | 22-11-2001 |
| | | | JP | 2003533702 T | 11-11-2003 |
| | | | US | 2003184324 A1 | 02-10-2003 |
| US 5844414 | A | 01-12-1998 | SE | 502575 C2 | 13-11-1995 |
| | | | AT | 271228 T | 15-07-2004 |
| | | | AU | 3091095 A | 04-03-1996 |
| | | | DE | 69533258 D1 | 19-08-2004 |
| | | | DE | 69533258 T2 | 28-07-2005 |
| | | | EP | 0772784 A1 | 14-05-1997 |
| | | | FI | 970358 A | 28-01-1997 |
| | | | NO | 970363 A | 21-03-1997 |
| | | | SE | 9402604 A | 13-11-1995 |
| | | | WO | 9604562 A1 | 15-02-1996 |
| US 5589773 | A | 31-12-1996 | DE | 69511278 D1 | 09-09-1999 |
| | | | DE | 69511278 T2 | 25-11-1999 |
| | | | EP | 0786094 A1 | 30-07-1997 |
| | | | JP | 10501624 T | 10-02-1998 |
| | | | JP | 3219771 B2 | 15-10-2001 |
| | | | WO | 9612198 A1 | 25-04-1996 |

EPO FORM P0460

Pour tout renseignement concernant cette annexe :  voir Journal Officiel de l'Office européen des  brevets, No.12/82